# EUROPEAN PATENT APPLICATION

(11) **EP 2 532 901 A1**
(43) Date of publication of application: **12.12.2012**
(21) Application number: 11382191.2
(22) Date of filing: 09.06.2011
(51) Int. Cl.: F16B 2/10, H01Q 1/12

(54) **Automatic device for securing an antenna to a mast, and method associated thereto**

(71) Applicant: Angel Iglesias, S.A., 20009 San Sebastian (ES)
(72) Inventor: San José Damboriena, Jesús, Maria, 20009 San Sebastian (ES); Lavado García, Luciano, 20009 San Sebastian (ES); Varona Chozas, Cesar, 20009 San Sebastian (ES)
(74) Representative: Carpintero Lopez, Francisco

(57) **Abstract**

The invention relates to an automatic device for securing an antenna (12) to a mast (13), comprising a base part (1) coupled to the antenna (12), and a mobile part (2) articulated at one of its ends (2a) to the first part (1) by means of a first rotation shaft (3); wherein said first rotation shaft (3) comprises at least one first elastic means (4) forcing a rotational movement of the mobile part (2) towards the base part (1); wherein the mobile part (2) additionally comprises a toothed end (2b) close to the first rotation shaft (3); such that a catch element (5) can be coupled to the different teeth forming said toothed end (2b) of the mobile part (2); and wherein said catch (5) is coupled to a second elastic means (7) which creates a moment of force (M) on said catch (5) in a clockwise or anticlockwise direction; preventing the opening of the device once the mast (13) is located between the base part (1) and the mobile part (2).

## Description

### Technical Field of the Invention

The present invention relates to an automatic device for securing an antenna to a mast, and to the method for automatically securing the antenna to the mast associated with said device; which has a preferred application in the sector of the installation of telecommunications systems.

The purpose of this automatic device is to achieve a simple and reliable securing of the antenna to the mast, such that by means of a simple method for securing associated with said device, the performance of complex securing maneuvers which can cause a risk of accident to the operator in charge of its installation is prevented, and all this with a device formed by a reduced number of elements, which are easily formable, highly resistant to the weather conditions which can affect them and have an intuitive and ergonomic handling.

### Background of the Invention

The drawbacks relating to a safe installation of antennas, for example telecommunications antennas, to different fixed elements such as posts or masts is known; since it requires a complex assembly which is inconvenient for a single operator to carry out and which can cause risks of accident when carrying out the correct securing thereof.

This is due to the fact that currently, the device commonly used to achieve the securing between an antenna and a mast consists of a grip formed by two parts, preferably made of metal, and toothed in the area of contact with the mast to improve the securing thereof; wherein to carry out the mentioned securing, one of the parts is coupled to the antenna, and the other part is moved or extracted from the device, such that it allows introducing said mast; and wherein once the mast and the antenna are placed in the desired positions, the second part is fixed, and to that end it is placed in its service position, in contact with the mast; to subsequently assure the correct securing by means of screw or pin type elements with their respective tightening nuts belonging to the device.

But this grip type device has a series of drawbacks, since on one hand the operator in charge must secure the antenna in the desired position, and at the same time the same operator must fix the grip such that the antenna is secured to the mast in the desired position; with the consequent risk of having to take care that the antenna does not move from its ideal position, and wherein since the antenna is a heavy object, it can be detached from the area in which it is to be located.

There is an alternative, shown in the application of utility model ES-1070726-U, which describes a semiautomatic gripping device formed by three parts, one of them integral with the antenna, and the other two, identical to one another, articulated with respect to the first part and configured like a grip; such that the gripping method is divided into two subprocesses:
- The first subprocess is known as the pre-gripping, wherein said two identical parts have respective springs which force pressing same against the mast, which is located between both identical parts; such that the antenna is temporarily fixed to the mast.
- And subsequently, the second subprocess called definitive gripping refers to using a rod located and articulated with respect to one of the two identical parts; and which is coupled to the other identical part through a threaded bracket or nut; such that it assures a correct antenna-mast securing.

But this solution has a main drawback due to its commissioning, since in the pre-gripping subprocess; the antenna is secured to the mast as a result of the aid of two identical parts and of the respective springs associated therewith; but it is known that an antenna has a considerable weight, and wherein the identical parts are not capable of withstanding that weight before the definitive gripping occurs, with the main consequence that the operator does not hold the antenna between subprocesses and the latter may fall due to its own weight.

In view of the mentioned background and the existing drawbacks related to achieving a reliable, safe and simple pre-gripping for the operator, it is necessary for a new automatic device for the securing between antenna and mast to appear, solving the problems set forth above and simplifying all the steps for securing respective elements, minimizing the possible risks that can occur, and all this with a simple device which is easy to form and maintain or substitute.

### Description of the Invention

The present invention relates to an automatic device, configured to act as a clamp, for securing an antenna to a mast, and to the method for securing associated thereto, which considerably solves the drawbacks described above since it allows a simple and reliable securing of the antenna to the mast without the need for the operator to perform complex securing maneuvers, and all this with a device formed by a reduced number of elements, which are easily formable and highly resistant to the different external agents detrimental to the correct operation thereof.

The automatic device for securing an antenna to a mast proposed by the invention comprises:
- a base part coupled to the antenna,
- a mobile part, acting as a mobile portion of the device object of the invention, which is articulated at one of its ends to the first part by means of a first rotation shaft; and wherein said first rotation shaft comprises at least one first elastic means forcing a rotational movement (in the closing direction) of the mobile part towards the base part (forming a clamp which can be secured to the mast); and wherein additionally:
- the mobile part comprises a toothed edge close to the first rotation shaft; and
- the device comprises a catch element which can be coupled to the different teeth forming said toothed edge of the mobile part; and wherein
- said catch is linked to a second elastic means comprising an actuation lever which can adopt at least two positions; wherein the movement, in either position, of said lever exerts a tractive or compressive force on said second elastic means, and wherein said force is transmitted to the catch creating a moment of force on said catch in a clockwise or anticlockwise direction.

Substantial differences with state of the art described above are observed, mainly with respect to the elements forming the device object of the invention; the main differentiating technical features being:
- The catch element is associated with a second elastic means, so the forces exerted on the second elastic element will be directly linked to the movement of the catch; thus, if the second elastic means is pulled, the catch will tend to rotate in one direction (clockwise or anticlockwise) and will allow the rotation of the mobile part in that same direction, opposing the rotation in the opposite direction.
- The second elastic means is coupled to a lever, which can be moved in one direction or another to exert a tractive or compressive force in the mentioned second elastic means; it being possible for the operator to act directly with this lever and decide how the catch can rotate.
- The catch is coupled to the toothing of the mobile part, and therefore the movement of the catch is directly linked to the rotation of the mobile part, allowing the latter to be opened or closed at the will of the operator.

And based on said features, a method for securing the antenna to the mast associated with the described device is described below; to that end, the method comprises the following steps:
a) Acting on the actuation lever of the catch, such that the catch enters into the service position and blocks the closing of the mobile part; i.e., the closing movement is the movement of the mobile part towards the base part; but allows its opening since it allows one of the rotations, clockwise or anticlockwise;
b) rotating the mobile part (in the opening direction) such that it allows the insertion of the mast between the mobile part and the base part. Such that during the rotation of the mobile clamp the teeth of the catch jump in the toothed edge of the mobile part, such that when the mobile part stops rotating, the teeth of the catch are locked in the toothed edge and the mobile part is retained in that open position without being able to retreat to the closed position;
c) acting on the actuation lever of the catch, such that the catch enters into the service position and allows the closing of the mobile part since it allows the other one of the rotations, anticlockwise or clockwise. In this position, the spring of the catch attempts to rotate but does not succeed because it is locked in the toothed edge of the mobile part;
d) introducing the mast between the mobile part and the base part;
e) acting on the mobile part (in the opening direction), such that the catch leaves its service position (it is has no opposition from the catch) and the elastic force of the first elastic means moves said mobile part closer to the mast, the mobile part being in the closed position and the device (and therefore the antenna) being secured to the mast. In this position the antenna is secured to the mast through the base part and mobile part and, furthermore, the catch has started to block the position of the mobile part such that it cannot rotate in the opening direction.

Steps a), b) and c) can be performed with the antenna supported, for example on the ground, i.e., without the operator having to hold the antenna with his hand.

In relation to step e), it should be clarified that the action on the mobile part contemplates different possibilities of acting thereon; and wherein one of the possibilities lies in the fact that the operator himself, once the mast is located between the base part and the mobile part, slightly moves the device such that the mast pushes against the mobile part and the catch is released from its service position, such that since the lever is in the closed position of the mobile part, the catch allows the latter to close but does not allow it to open; and wherein the first elastic means causes the closing of the mobile part until coming into contact with the mast, and fixes the catch to the corresponding toothed end of the mobile part.

Since the opening of the mobile part is prevented by means of a mechanical element such as the catch, a correct securing of the antenna to the mast is assured even when the operator stops acting on or holding the antenna; unlike what is described in the application of utility model ES-1070726-U.

The possibility of the second elastic means being a cylindrical spring is contemplated; different springs being able to be contemplated such as a coil spring for example; wherein said spring is wound on a second rotation shaft, such that the movement of the lever causes an elongation or contraction of the spring around the second rotation shaft.

The use of a cylindrical spring, which is wound on a second rotation shaft, gives rise to the lever being able to be moved between two end positions by simply moving an end of the spring in one direction or another, since if the lever is moved towards a first direction, corresponding with the winding direction of the spring, a tractive force occurs since it is wound on the second rotation shaft; and likewise, if the lever is moved towards a second direction opposite the first one, corresponding with the opposite winding direction of the spring, a compressive force occurs since it is wound on said second rotation shaft; and these two forces, tractive or compressive, will be directly linked to a moment of force experienced by the catch; it therefore being a simple solution for achieving the desired technical effect.

In relation to the arrangement of the lever arranged in the device object of the invention, the possibility is contemplated that the base part comprises a longitudinal housing wherein the actuation lever is coupled, and wherein said longitudinal housing defines said two positions according to whether the clockwise or anticlockwise rotation of the catch is desired. Describing, therefore, only two positions of movement of the lever, and wherein the longitudinal housing is easily formable and intuitive for the operator to decide the movement of the catch.

As has been described above, these two positions of the lever of the second elastic means force the latter to be tensioned and force it to be subjected to a tractive or compressive force; such that since it is directly related to the rotational movement of the catch, said catch is also subjected to the moment of force in one direction or in another, according to whether the second elastic means is subjected to traction or to compression.

When carrying out the definitive securing of the securing device object of the invention, two possibilities are contemplated, each of them differentiated by the anchoring position of the definitive securing element, in this case a bolt, and being able to be complementary as desired.
1. The first possibility comprises:
   - A pivoting bolt, which is coupled at one of its ends to the base part allowing its free rotation;
   - wherein the mobile part comprises a groove located at the end opposite the first rotation shaft, wherein said groove allows the coupling of the pivoting bolt; and wherein
   - said pivoting bolt comprises a nut of dimensions greater than the groove of the mobile part.
2. In relation to the second possibility, it comprises:
   - A pivoting bolt, which is coupled to the mobile part at the end opposite the first rotation shaft of the mobile part, allowing its free rotation;
   - wherein the base part comprises a groove located at one of its ends, wherein said groove allows the coupling of the pivoting bolt; and wherein
   - said pivoting bolt comprises a nut of dimensions greater than the groove of the base part.

In both possibilities it is observed how a bolt is capable of pivoting from the base part or the mobile part to the groove located in the mobile part or in the base part, according to where its rotation shaft is located; such that once the mast is located between the base part and the mobile part and is secured by the force itself of the catch, the bolt is pivoted until it enters the corresponding groove to subsequently secure it with the respective nut.

This definitive securing assures that the antenna is perfectly secured to the mast as a result of the tightening of the bolt in the respective groove.

By way of clarification, and in terms of the method for securing both the possibilities relating to the definitive securing of the device object of the invention, taking into account the nomenclature used in the previously described steps referred to the method for securing the antenna to the mast, the following is described:
1. For the first possibility, and after step e), the method comprises:
   f) moving the pivoting bolt until one of its ends fits with the respective groove of the mobile part; and
   g) screwing the nut of the pivoting bolt until it comes into contact with the mobile part.
2. And for the second possibility, and after step e), the method comprises:
   f) moving the pivoting bolt until one of its ends fits with the respective groove of the base part; and
   g) screwing the nut of the pivoting bolt until it comes into contact with the base part.

Finally, and in reference to the securing device object of the invention, the possibility is contemplated that the base part comprises a toothing located in the area of contact with the mast; and the mobile part comprises a toothing located in the area of contact with the mast; these toothings located in both parts and in the areas of contact with the mast to be secured assure an increase in the mast-device coefficient of friction, due to the fact that the toothing itself is locked in the outer surface of the mast, preventing the possible sliding of the securing device together with the antenna to be secured.

Thus, according to the described invention, the automatic device for securing an antenna to a mast proposed by the invention, and the method associated thereto, is an advance in the securing devices known up until now, and fully and satisfactorily solves the problems set forth above in the line of achieving a simple and reliable securing of the antenna to the mast, without the need for the operator to perform complex securing maneuvers, and all this with a device formed by elements which are simple, easy to use, safe to handle and have a simple maintenance.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows a three-dimensional schematic view of the automatic securing device, the mobile part being in the open position with respect to the base part.
Figure 2 shows a three-dimensional schematic view similar to Figure 1, in which the mobile part is in the closed position with respect to the base part.
Figure 3 shows a schematic profile view of the device shown in Figure 2.
Figure 4 shows a three-dimensional schematic view of a detail of the device object of the invention, corresponding to the actuation lever of the second elastic means associated with the catch.
Figure 5 shows a three-dimensional schematic view of the automatic securing device, the mobile part being in the open position with respect to the base part, wherein the second elastic means is a coil type spring.
Figures 6A, 6B, 6C and 6D show a sequence of the steps to be taken to secure the mast to the antenna through the device object of the invention.
Figures 7A and 7B show two details corresponding to the actuation lever and the catch, the latter being uncoupled from the mobile part.
Figures 8A and 8B show two details corresponding to the actuation lever and the catch, the latter being uncoupled with respect to the mobile part and allowing its opening movement and blocking the closing movement.
Figures 9A and 9B show two details corresponding to the actuation lever and the catch, the latter being coupled with respect to the mobile part and allowing its closing movement.
Figure 10 shows a three-dimensional schematic view of the automatic securing device, being in the service position.

### Preferred Embodiment of the Invention

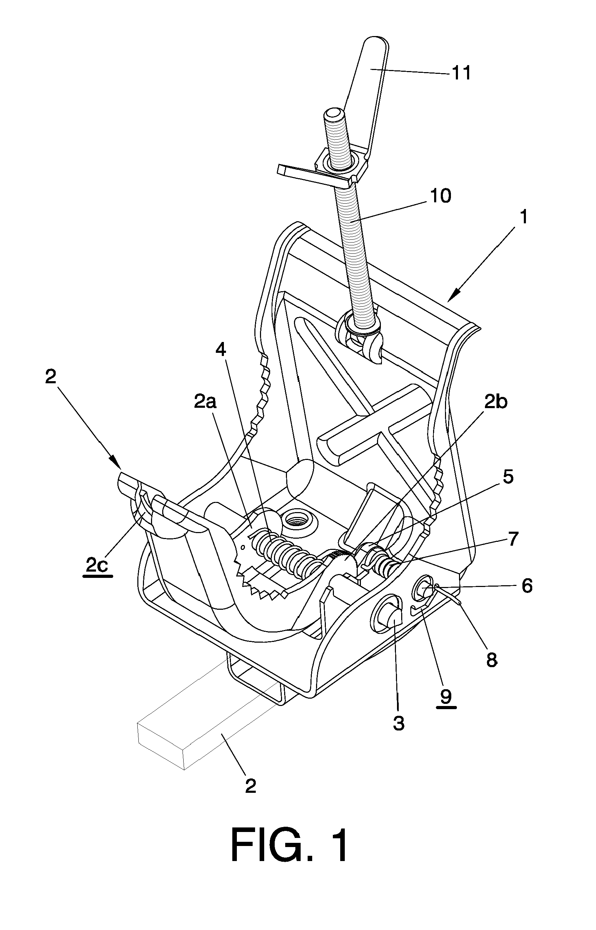

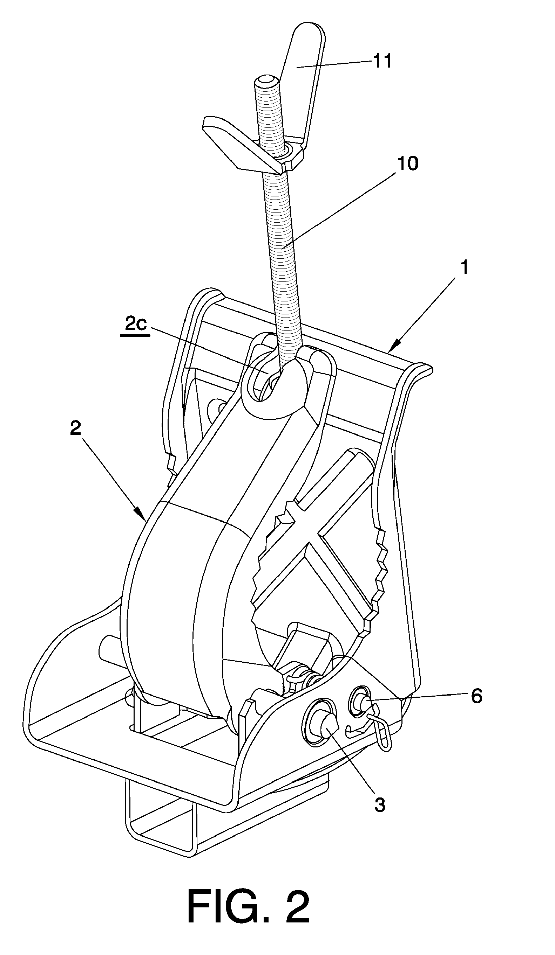

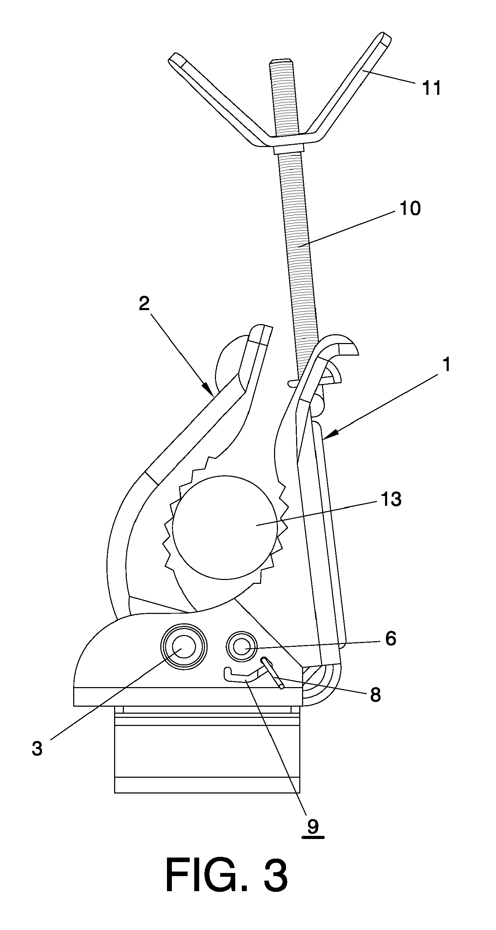

In view of Figures 1 to 4, it can be observed how in one of the possible embodiments of the automatic device for securing an antenna (12) to a mast (13) proposed by the invention comprises:
- A base part (1) coupled to the antenna (12), and
- a mobile part (2) articulated at one of its ends (2a) to the base part (1) by means of a first rotation shaft (3); and wherein said first rotation shaft (3) comprises a first cylindrical spring (4) forcing a rotational movement of the mobile part (2) towards the base part (1); wherein additionally
   the mobile part (2) comprises a toothed end (2b) close to the first rotation shaft (3); wherein a catch element (5) can be coupled to the different teeth forming said toothed end (2b) of the mobile part (2); and wherein
   said catch (5) is coupled to a second cylindrical spring (7) comprising a actuation lever (8) located in a longitudinal housing (9) and which can adopt two limit positions (9', 9"); wherein the movement, in either position (9, 9"), of said lever (8) exerts a tractive or compressive force on said second elastic means (7), and wherein said force (F) is transmitted to the catch (5), creating a moment of force (M) on said catch (5) in a clockwise or anticlockwise direction.

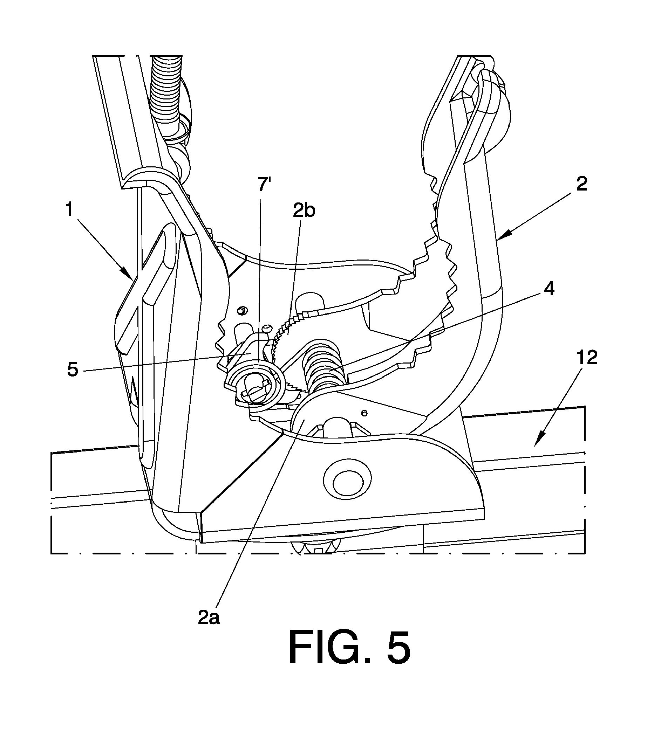

In Figure 5, it can be observed how in another preferred embodiment, the second elastic means comprises a second coil spring (7').

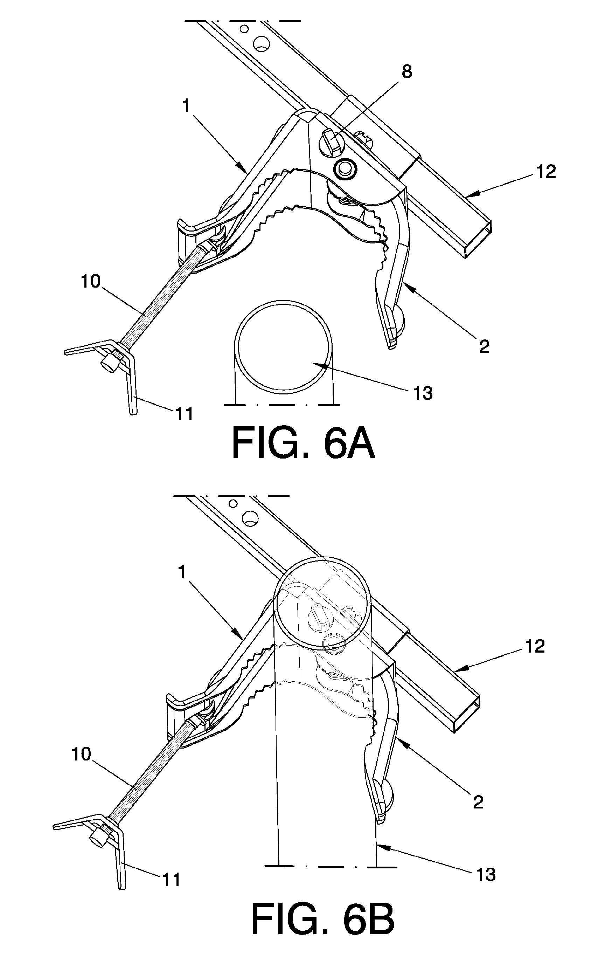

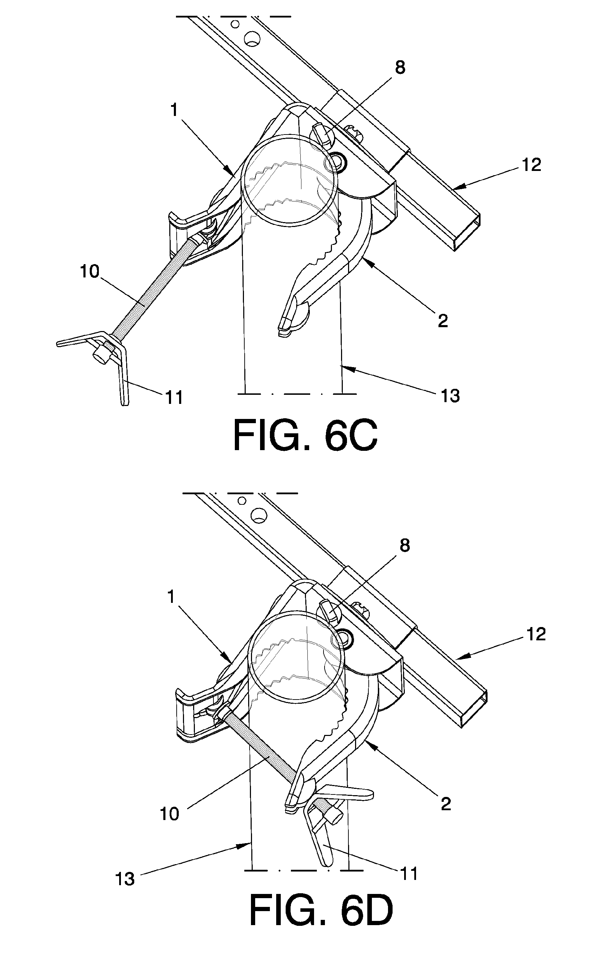

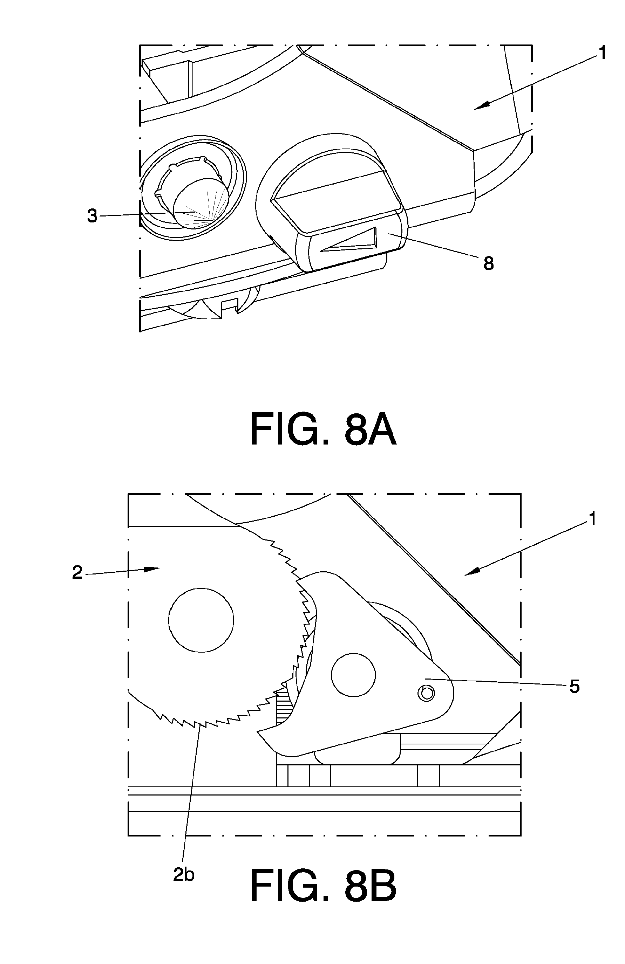

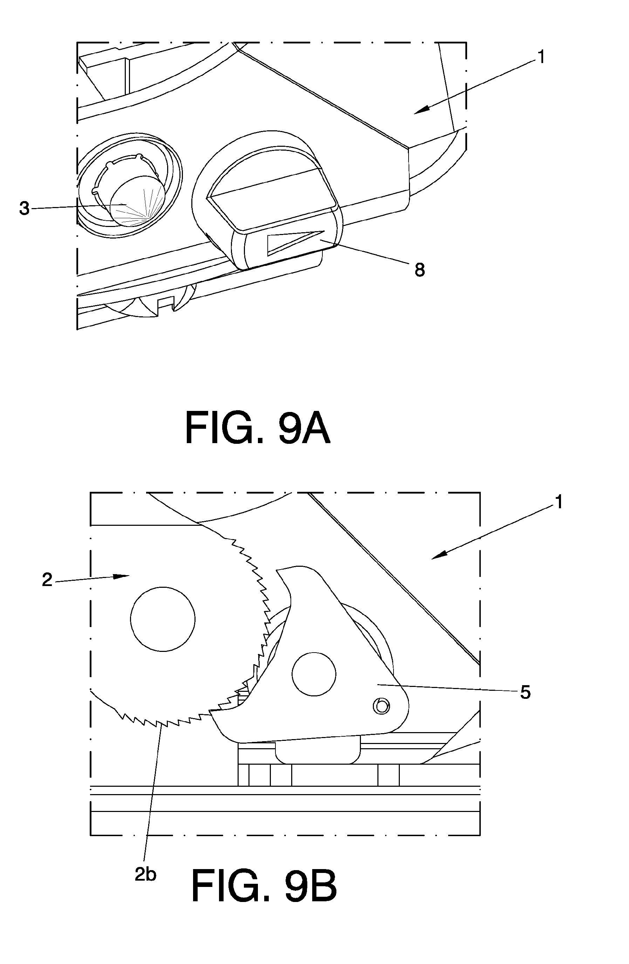

Figures 6A, 6B, 6C and 6D show a method for securing the mast (13) to the antenna (12) which contemplates the following steps:
a) acting on the actuation lever (8) of the catch (5), such that the catch (5) enters into the service position and blocks the closing of the mobile part (2); i.e., the catch (5) tends to pivot towards the left, and therefore the lever (8) is in the right position (9') of the longitudinal housing (9), as is additionally shown in Figures 8A and 8B;
b) rotating the mobile part (2) such that it allows the insertion of the mast (13) between the mobile part (2) and the base part (1);
c) acting on the actuation lever (8) of the catch (5), such that the catch (5) enters into the service position and allows the closing of the mobile part (2); i.e., the catch (5) tends to pivot towards the right, and therefore the lever (8) is in the left position (9") of the longitudinal housing (9), as is additionally shown in Figures 9A and 9B;
d) introducing the mast (13) between the mobile part (2) and the base part (1);
e) acting on the mobile part (2), towards a greater opening position, such that the catch (5) leaves its service position and the elastic force of the first cylindrical spring (3) moves said mobile part (2) closer to the mast, the mobile part (2) being in the closed position and the device being secured to the mast (13).

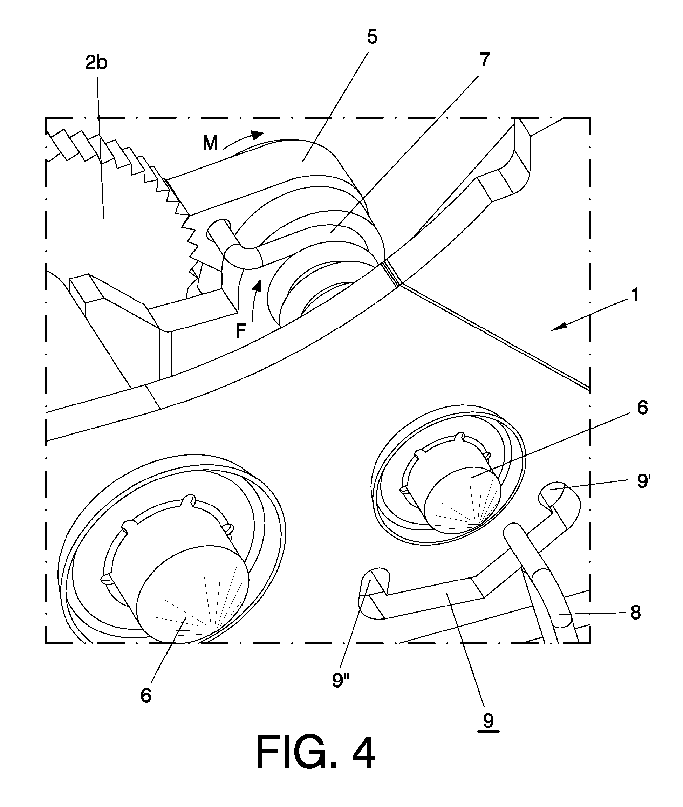

In particular, and specifically in Figure 4, it is observed that the actuation lever (8) is located towards the left in its respective longitudinal housing (9); and wherein it can be observed how the second cylindrical spring (7) is directly coupled to the catch (5), and the latter is coupled to the toothed end (2b) of the mobile part (2); and wherein said second cylindrical spring (7) is wound on a second rotation shaft (6), such that the movement of the lever (8) causes an elongation or contraction of the spring around the second rotation shaft (6).

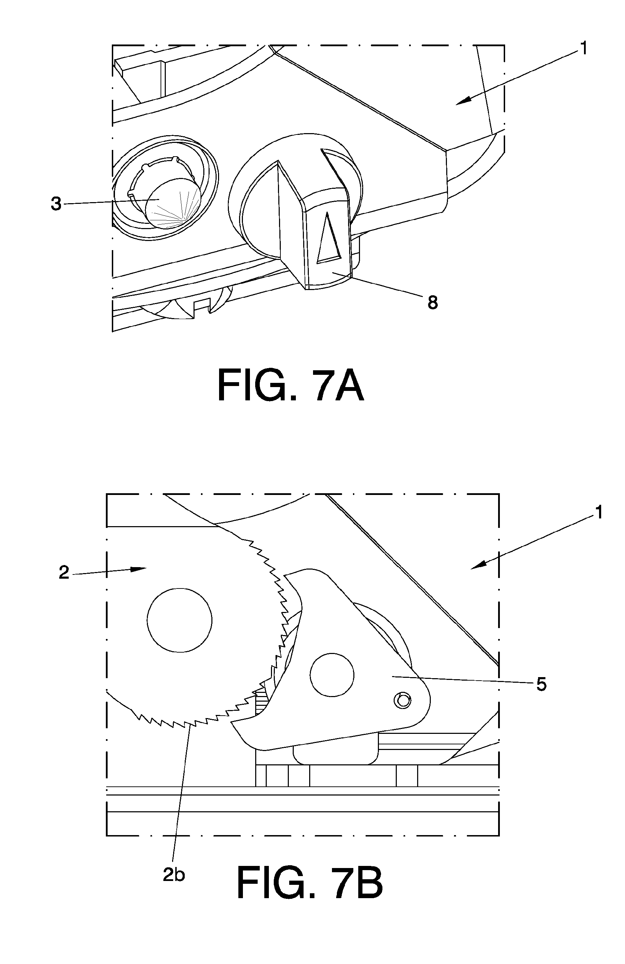

A similar thing occurs with the lever (8) shown in Figures 7A, 8A and 9A; wherein in Figure 7A there is a position in which the catch (5) is uncoupled from the toothed end (2b) of the mobile part (2) to be able to handle it without preventing the movement of said mobile part (2) in any of the two rotation directions.

The automatic securing described above allows fixing the antenna (12) to the mast (13) without the possibility of the automatic securing device being detached, but in order to assure a definitive securing, the device additionally comprises:
- A pivoting bolt (10) which is coupled at one of its ends (1a) to the base part (1), allowing its free rotation;
- wherein the mobile part (2) comprises a groove (2c) located at the end opposite the first rotation shaft (3), wherein said groove (2c) allows the coupling of the pivoting bolt (10); and wherein
- said pivoting bolt (10) comprises a nut (11) of dimensions greater than the groove (2c) of the mobile part (2); such that, in view of Figures 6C and 6D, the securing is performed by means of:
   f) moving the pivoting bolt (10) until one of its ends (10a) fits with the respective groove (2c) of the mobile part (2); and
   g) screwing the nut (11) of the pivoting bolt (10) until it comes into contact with the mobile part (2).

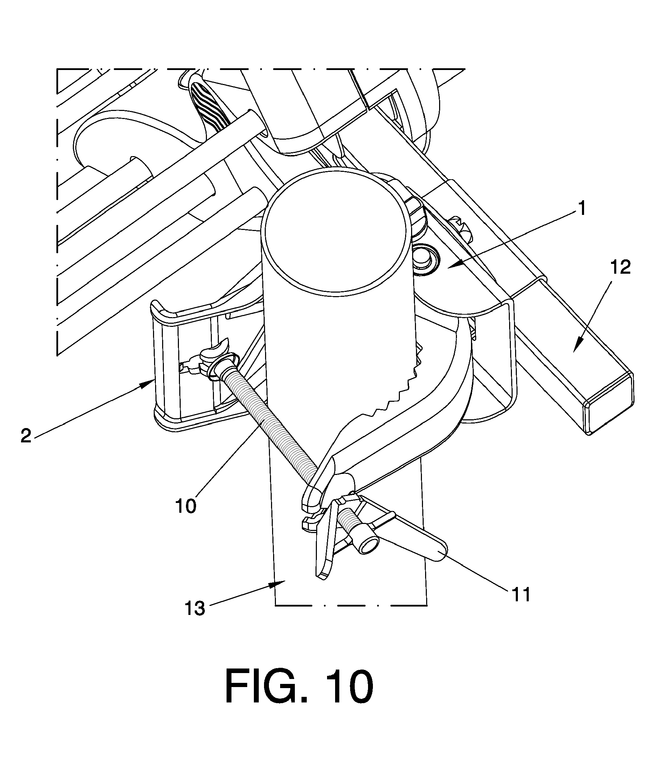

And to assure that the automatic device does not slide through the mast (13), it is observed in Figure 10 that the base part (1) comprises a toothing (1 b) located in the area of contact with the mast (13); and the mobile part (2) comprises a toothing (2d) located in the area of contact with the mast (13).

In view of this description and set of figures, the person skilled in the art will understand that the embodiments of the invention which have been described can be combined in multiple ways within the object of the invention. The invention has been described according to several preferred embodiments thereof, but for the person skilled in the art it will be evident that multiple variations can be introduced in said preferred embodiments without exceeding the object of the claimed invention.

## Claims

**1.** Automatic device for securing an antenna (12) to a mast (13), comprising:
- a base part (1) coupled to the antenna (12), and
- a mobile part (2) articulated at one of its ends (2a) to the first part (1) by means of a first rotation shaft (3); and wherein said first rotation shaft (3) comprises at least one first elastic means (4) forcing a rotational movement of the mobile part (2) towards the base part (1), being the device **characterized in that**
the mobile part (2) comprises a toothed edge (2b) close to the first rotation shaft (3); and **in that** the device comprises a catch element (5) which can be coupled to the different teeth forming said toothed edge (2b) of the mobile part (2); and wherein
said catch (5) is linked to a second elastic means (7) comprising an actuation lever (8) which can adopt at least two positions (9', 9"); wherein the movement, in either position (9, 9"), of said lever (8) exerts a tractive or compressive force (F) on said second elastic means (7), and wherein said force (F) is transmitted to the catch (5) creating a moment of force (M) on said catch (5) in a clockwise or anticlockwise direction.

**2.** Automatic device according to claim 1, **characterized in that** the second elastic means (7) is a cylindrical spring, wherein said spring is wound on a second rotation shaft (6), such that the movement of the lever (8) causes an elongation or contraction of the spring around the second rotation shaft (6).

**3.** Automatic device according to any of the previous claims, **characterized in that** the base part (1) comprises a longitudinal housing (9) wherein the actuation lever (8) is coupled, and wherein said longitudinal housing (9) defines said at least two positions (9', 9") according to whether the clockwise or anticlockwise rotation of the catch (5) is desired.

**4.** Automatic device according to any of the previous claims, **characterized in that** it comprises
a pivoting bolt (10) coupled at one of its ends (1a) to the base part (1) allowing its free rotation; and **in that**
the mobile part (2) comprises a groove (2c) located at the end opposite the first rotation shaft (3), wherein said groove (2c) allows the coupling of the pivoting bolt (10); and wherein
said pivoting bolt (10) comprises a nut (11) of dimensions greater than the groove (2c) of the mobile part (2).

**5.** Automatic device according to any of claims 1 to 3, **characterized in that** it comprises
a pivoting bolt (10) coupled to the mobile part (2) at the end opposite the first rotation shaft (3) of the mobile part (2), allowing its free rotation;
the base part (1) comprises a groove (1c) located at one of its ends, wherein said groove (1 c) allows the coupling of the pivoting bolt (10); and wherein
said pivoting bolt (10) comprises a nut (11) of dimensions greater than the groove (1c) of the base part (1).

**6.** Automatic device according to any of the previous claims, **characterized in that**
the base part (1) comprises a toothing (1 b) located in the area of contact with the mast (13); and
the mobile part (2) comprises a toothing (2d) located in the area of contact with the mast (13).

**7.** Method for automatically securing an antenna (12) to a mast (13) according to the device defined in any of the previous claims, **characterized in that** it comprises the following steps:
a) acting on the actuation lever (8) of the catch (5), such that the catch (5) enters into the service position and blocks the closing of the mobile part (2); i.e., the movement of the mobile part (2) towards the base part (1); but allows its opening since it allows one of the rotations, clockwise or anticlockwise;
b) rotating the mobile part (2) such that it allows the insertion of the mast (13) between the mobile part (2) and the base part (1);
c) acting on the actuation lever (8) of the catch (5), such that the catch (5) enters into the service position and allows the closing of the mobile part (2) since it allows the other one of the rotations, anticlockwise or clockwise;
d) introducing the mast (13) between the mobile part (2) and the base part (1); and
e) acting on the mobile part (2), such that the catch (5) leaves its service position and the elastic force of the first elastic means (3) moves said mobile part (2) closer to the mast, the mobile part (2) being in the closed position and the mast (13) being secured.

**7.** Method for automatically securing an antenna (12) to a mast (13) according to the previous claim and the device defined in claim 4, **characterized in that** after step e), it comprises:
f) moving the pivoting bolt (10) until one of its ends (10a) fits with the respective groove (2c) of the mobile part (2); and
g) screwing the nut (11) of the pivoting bolt (10) until it comes into contact with the mobile part (2).

**8.** Method for automatically securing an antenna (12) to a mast (13) according to claim 6 and the device defined in claim 5, **characterized in that** after step e), it comprises:
f) moving the pivoting bolt (10) until one of its ends (10a) fits with the respective groove (1c) of the base part (1); and
g) screwing the nut (11) of the pivoting bolt (10) until it comes into contact with the base part (1).
